# EUROPEAN PATENT APPLICATION

(11) **EP 4 191 716 A1**
(43) Date of publication of application: **07.06.2023**
(21) Application number: 21211868.1
(22) Date of filing: 02.12.2021
(51) Int. Cl.: H01M 8/0258, H01M 8/026, H01M 8/0267

(54) **PLATE DEVICE FOR A FUEL STACK AND FUEL CELL DEVICE COMPRISING THE SAME**

(71) Applicant: AVL List GmbH, 8020 Graz (AT); AVL Fuel Cell Canada Inc., Burnaby, British Columbia V5A4N8 (CA)
(72) Inventor: Raibeck, Laura, V5A4N8 Vancouver (CV); Pöschl, Robert, Graz (AT)
(74) Representative: Gamper, Bettina

(57) **Abstract**

The present invention relates to a plate device (10) for an electrochemical fuel cell stack having stacked cells and a corresponding fuel cell device. The plate device is provided per each cell (20) for distributing and collecting a fluid across planar dimensions of a cell (20). A transition section (11) of the plate device (10) forms a flat shaped flow cross-section in a planar direction of the plate device (10) being in fluid communication between the fluid port (30) and the cell (20). Plate features for distributing or collecting a fluid to be transferred comprise at least one barrier element (16) being disposed within a fluid flow and having an elongated cross-section inclined to a flow direction of the fluid flow for locally throttling said fluid flow.

## Description

The present application relates to a plate device for an electrochemical fuel cell stack for distributing and collecting a fluid across planar dimensions of a cell, and a fuel cell device comprising at least one plate device per each cell for a fluid communication with at least one fluid port of the fuel cell device.

### Technical field of the invention

The plate device according to the invention is suitable for a fuel cell system, in particular a compact fuel cell power source for transportation applications having a proton exchange membrane (PEM-FC) or any other type of electrochemical device comprising a stack of cells accommodating channels or other kinds of pathways for conducting fluids for electrochemical reaction in the cells.

### Background of the invention

Transportation applications require a compact fuel cell power source. This implies a compact design of a complex structures of ports, channels and pathways in the fuel cell stack for supplying all operation fluids to the cells. For an economical manufacturing and assembling, the design of a fuel cell stack strives for stackable parts to be repeatedly stacked to form so-called unit cells building up the fuel cell stack. As a result, a compact structure of ports, channels and pathways for the operation fluids needs to be integrated into a design of the stackable parts. Several compact fuel cell stack designs integrate different kinds of channels and manifolds for supply of coolant, hydrogen and air as well as discharge of unused species, or exhaust gas of water or wet gaseous fluid within the stack cross-section.

It is known to provide so-called transition regions of a fuel cell stack on e.g. two opposite sides of the cells for branching-off fluids from fluid ports passing through the fuel cell stack, and distributing across the width of the active area. Such transition regions provide a fluid communication interface to the cells. A common stack design is constituted by the membrane-electrode assemblies of each cell to be stacked between bipolar plates providing electrical conductivity between the cells, wherein the bipolar plates have a longer dimension than the membrane-electrode assemblies so as to enclose and protect the latter. In a common compact stack design, such transition regions are provided within outer sections of the bipolar plates or additional dedicated flow plates extending beyond planar dimension of the membrane-electrode assemblies. In this compact stack design, the supply and discharge of fluid in communication with the cells is accommodated in the form of internal channels or pathways integrated in the bipolar plates or flow plates by forming open flow cross-sections recessed in surfaces of adjacently stacked plates or any other elements of the stack.

For a good electrochemical efficiency of a fuel cell, it is crucial that a flow design of the transition sections aims to achieve a preferrable uniform mass flow distribution in an interface between the stack and the cell for a possibly even fluid distribution or wetting of the membrane-electrode assembly via a flat shaped cross-section across a full width or length of the cell.

In a known flow design concept for a transition region, a flat shaped flow cross-section is populated with pillar like plate features for scattering and spreading a fluid flow between a narrow inlet and a broad outlet. However, this known flow design may require a large plate volume, i.e. height of pillars as well as footprint in plane dimensions, to achieve a desired level of uniform flow distribution.

In another known flow design concept for a transition region, a flat shaped flow cross-section is split into a plurality of channels diversifying or spreading in the sense of a bunch of flowers between a narrow inlet and a broad outlet. However, this design may result in high pressure drop along the channels and an uneven distribution of pressure or volume and velocity of fluid flow at an end of all channels.

Summarizing the above, known flow design concepts facing disadvantages of an uneven flow distribution into active areas of a cell, or a high pressure drop in the transition region leading to a thicker than ideal plate thickness to allow for a deeper transition region and bigger flow cross-section.

Ideally, the fluid spreads out with the same amount of flow entering each channel on the cell side, and the transition region should achieve this spreading out of flow in as little space as possible, in terms of both depth and length.

Hence, there is room for improvements of flow designs with respect to a distribution and collection property for supply and return of fluid flows for enhanced efficiency of a fuel cell, as well as with respect to a required space in relation to the distribution property for compactness of the fuel cell.

### Summary of the Invention

It is an object of the invention to enhance an electrochemical efficiency and compactness of a fuel cell power source. In particular, it is an object of the invention to provide a flow design concept for transition regions in a fuel cell stack to be integrated by means of a stackable plate device having flow properties and/or relation of flow properties to required space being superior to comparable common flow designs of fuel cells.

The object is solved by a plate device having the features of claim 1 and a corresponding electrochemical fuel cell device having these features. Further features and details of the invention result from the dependent claims, the specification, and the drawings.

The invention proposes a plate device for an electrochemical fuel cell stack having stacked cells. The plate device being provided per each cell for distributing and collecting a fluid across planar dimensions of a cell. The plate device comprises a centrally arranged cell section, an outer arranged port section and a transition section arranged in between. The central cell section encompasses a plurality of channels across planar dimensions of a cell. The outer port section encloses a cross-section opening of a fluid port passing through the plate device in a thickness direction. The transition section forms a flat shaped flow cross-section in a planar direction of the plate device which is in fluid communication between the fluid port and the cell. Furthermore, the plate device has plate features arranged in the transition section for distributing or collecting a fluid to be transferred through the flat shaped flow cross-section. The plate features comprise at least one barrier element (16) being disposed within a fluid flow and having an elongated cross-section inclined to a flow direction of the fluid flow for locally throttling said fluid flow.

Hence, for the first time, the invention provides a flow design for a transition region of a fuel cell stack based on a modular system exhibiting plate features in the form of an elongated element directed as a barrier for locally throttling said fluid flow. This inventive principle is in contrast to the common approach of flow design striving for lowest flow resistance and pressure drop. However, a local throttling contributes to achieve a more equal mass flow distribution across the full width and planar dimensions of the active cell material.

As a first advantage, the barrier element plate features provide a regionally and proportionally tunable local flow resistance for influencing the flow of a fluid to be transferred along pathways between a fluid port and a cell and vice versa.

As a second advantage, an individual configuration of local flow resistances by means of the barrier elements through-out the area of a transition region allows for an individually controllable flow pattern across a flow cross-section in accordance with geometrical limitations of a transition area.

As a third advantage, the individual configuration of local flow resistances by means of the barrier elements through-out the area of a transition region allows for an individual optimization of the flow design with respect to a flow behavior of an individual fluid to be transferred in the transition area.

In particular, the throttling barrier elements according to the invention effect a partial pressure and raising an overall flow resistance or pressure drop. However, the invention is based on an insight that partially raised pressure differences enable a regional balanced flow resistance adapted to a directivity of flow to be independently induced by means of the guiding rail elements. Hence, the positioning and elongated dimension of the throttling barrier elements provide a setting of an individually adapted pressure loss along a variety of possible parallel or crossing pathways or secondary flows through a transition area, enabling an overall evenly distributed result of pressure or velocity of flow at the end of each possible pathway.

In other words, the throttling barrier elements have the benefit of balancing a flow of the induced secondary fluid flows at the expense of a slight additional pressure loss, while achieving a more effective and compact design.

The regional and individual configurability of barrier elements enable an optimization of flow design for each transition area and fluid for resulting in an even distribution or collection of the respective fluid across the entire width of a cell's entrance of the active area, or in particular, an even flow distribution to the membrane electrode assembly.

According to several alternative advantageous embodiments the plate features comprise a combination of two or three different kinds in shape, functionality and mutual configuration.

In one alternative advantageous embodiment, the plate features comprise the at least one barrier element for locally throttling the fluid flow, and pillar elements being arranged in an array formed through-out the flat shaped flow cross-section of the transition section for diffusing the fluid flow.

In another alternative advantageous embodiment, the plate features comprise the at least one barrier element, and rail elements having a longitudinal dimension directed for guiding a primary fluid flow into different flow directions of secondary fluid flows, wherein the at least one barrier element is disposed within a secondary fluid flow for throttling said secondary fluid flow.

In a preferred further alternative embodiment, the plate features comprise the at least one barrier element, the pillar elements being arranged in an array formed through-out the flat shaped flow cross-section for diffusing the fluid flow, and the rail elements having a longitudinal dimension extending through the array of diffusive pillar elements for guiding a primary fluid flow into different flow directions of secondary fluid flows, wherein a plurality of the at least one barrier elements being disposed within secondary fluid flows and each barrier element having an elongated cross-section inclined to a flow direction of the respective secondary fluid flow for throttling said secondary fluid flow.

The combination of three different types of flow promoting plate features causing three different flow influencing effects.

As an advantage, a regional configuration of these different feature types -beside size and density- allows for a further tuning and optimization of flow influencing in relation to the required space. This in turn, leads to achieving a higher spatial density of required flow influencing performance, or alternatively expressed, a more compact and efficient flow design for enabling a more compact and power dense fuel stack design.

According to a preferred embodiment, one of the at least one barrier element is disposed within a secondary flow of a flow direction along a shortest distance between the fluid port and the cell; and the elongated cross-section is inclined perpendicular to the flow direction for obstructing into a region of direct pathways within said secondary flow.

According to a further aspect of the preferred embodiment, another one of the at least one throttling barrier element is disposed within a secondary flow of a flow direction diverted from a shortest distance between the fluid port and the cell by guidance of one of the rail elements; and the elongated cross-section of the throttling barrier element is inclined oblique to the flow direction and/or inclined perpendicular to said shortest distance for obstructing into a region of diverted pathways within said secondary flow.

According to an aspect of the invention, the diffusive array of pillar elements has a regular positioning pattern of pillar elements, in particular an equidistant and/or square positioning of pillar elements.

According to another aspect of the invention, the cross-section of pillar elements has an equal aspect ratio, in particular a circular, square and/or polygonal cross-section.

According to an embodiment of the invention, the elongated cross-section of a throttling barrier element has an aspect ratio of at least 2:1.

According to an alternative embodiment of the invention, a dimension of the elongated cross-section of a throttling barrier element spans a barrier across at least two adjacent pillar elements in the array.

In an advantageous embodiment the longitudinal dimension of a guiding rail element extends across a distance equal to at least three adjacent pillar elements in line with and/or inclined to the diffusive array of pillar elements.

According to a further aspect of the preferred embodiment, a guiding rail element has at least two longitudinal dimensions joined in an angle, wherein, in particular, at least one longitudinal dimension extending in line and at least one longitudinal dimension extending diagonally inclined to the diffusive array of pillar elements.

According to an aspect of the invention, the fluid port is configured for supplying or returning an oxidant gas or a fuel gas reacting in the cell.

According to an alternative aspect of the invention, the fluid port is configured for supplying or returning a coolant circulating in thermal contact with the cell.

In a further advantageous embodiment the port section of the plate device encloses cross-section openings of fluid ports for oxidant gas, fuel gas and coolant passing through the plate device; and one of two opposite sides of the plate device in a thickness direction forms one transition section in fluid communication between one of the fluid ports and the cell.

In an advantageous embodiment, the plate device comprises two outer port sections and two transition sections arranged on opposite sides with respect to the cell section; wherein one of the two port section encloses cross-section openings of fluid ports for supplying a coolant or an reactant fluid of an oxidant gas or a fuel gas, and the other port section encloses cross-section openings of fluid ports for returning the coolant or a respective kind of unused educt fluid and/or product fluid; and one of the two transition sections is in fluid communication between the cell and one of the fluid ports for supplying one of said fluids, and the other transition section is in fluid communication between the cell and one of the fluid ports for returning the same or respective kind of same fluid, wherein, with respect to an arrangement of fluid port cross-sections in both port sections of the plate device, each pair of fluid ports supplying and returning the same or respective kind of same fluid is arranged to oppose diametrically across the cell section.

The invention also provides an electrochemical fuel cell device having a stack arrangement of stacked cells, and accommodating fluid ports for fuel gas, oxidant gas and/or coolant passing through a stacking direction of the stack arrangement; wherein the fuel cell device comprises between each of the stacked cells at least one plate device according to the invention for distributing and collecting a fluid across planar dimensions of a respective cell in fluid communication with at least one of the fluid ports.

Further objectives, advantages, features and applications of the present invention arise from the following description of the exemplary embodiments with reference to the drawings. In the drawing:
- Fig. 1: shows a schematic representation of an overall configuration and sectioning of a plate device; and
- Fig. 2: shows a cross-section the plate device according to an embodiment of the present invention having an individual configuration in accordance with a stack structure of a fuel cell device.

### Detailed description of the Invention

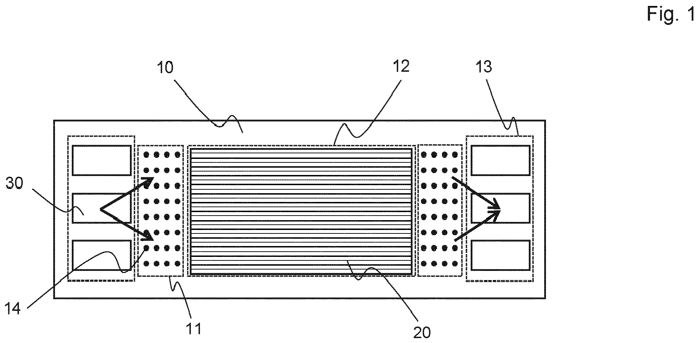

Fig. 1 shows a plate device 10 in the perspective of a cross-section of a stack arrangement in a fuel cell device. In this plane view, the plate device 10 exhibits certain sections marked by dashed lines. A centrally arranged cell section 12 is congruent to a cell 20 not illustrated to be stacked on the plate device 10. The cell section 12 comprises channels (not illustrated) in contact with the cell 20 running parallel and straight between opposite sides of the cell 20. The cell 20 comprises a membrane-electrode assembly (MEA) including all electrochemically active elements of the cells 20 as well as gas diffusion layer on an upper and lower side for getting in fluid communication. The fuel cell device comprises fluid ports 30 passing through the fuel cell stack in a stacking direction, as depicted by respective fluid port cross-sections arranged in two outer arranged port section 13 of the plate device 10 on opposite sides of the cell 20.

Between the cell section 12 and each of the two the port sections 13, the plate device 10 comprises transition sections 11. The transition sections 11 serve for distributing a fluid supplied by the fluid port 30 depicted on the left-hand side across the vertically depicted width dimension of the cell 20 and for collecting the fluid across the width of the cell 20 for returning the fluid in the fluid port 30 depicted on the right-hand side. On one side, the transition sections 11 are in fluid communication with the fluid ports 30 by means of vias (not illustrated), i.e. small channels branching of fluid from and into the fluid ports 30 at a predefined stacking level and height of the respective plate device 10. On the other side, the transition sections 11 are in in fluid communication with the gas diffusion layers of the cell 20 via an open interface area having a flat shaped flow cross-section across the width dimension of the cell 20. Each transition section 11 has individually configured plate features, like e.g. an array of pillar elements 14 arranged through out the flat shaped flow cross-section for promoting an even distribution between narrow vias on the side of the fluid ports 30 and the broad interface to the cell 20.

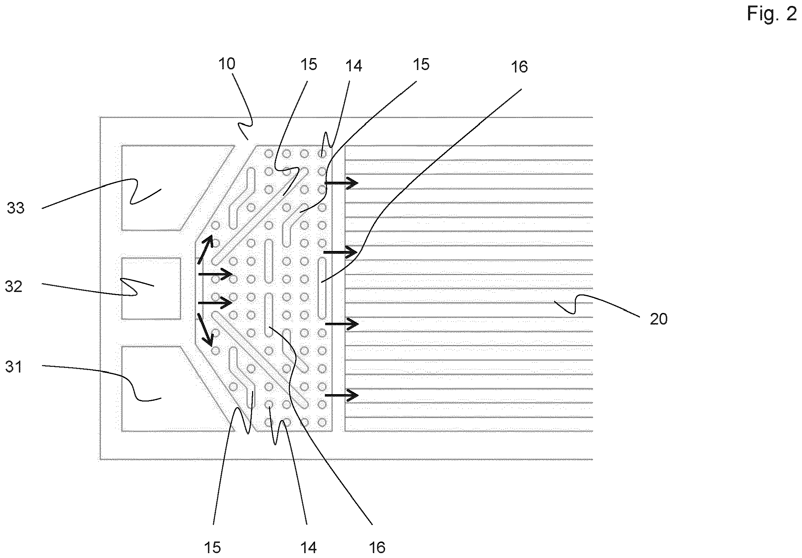

Fig. 2 shows a fraction of a specific configuration of a profile of a plate device 10 according to an embodiment of the invention. The fraction of the plate device 10 encloses specified fluid ports 31, 32, 33 for delivering respective fluids. More particular, the fluid port 31 of the plate device 10 on the lower side is arranged to transfer an oxidation gas, i.e. air or a reacted exhaust gas thereof. The fluid port 32 depicted in the middle is arranged to transfer a fuel gas, i.e. hydrogen, or a reacted exhaust gas thereof. The fluid port 33 of the plate device 10 on the upper side is arranged to transfer a coolant circulating around the cell.

When each fluid exits the supplying fluid port 31, 32, 33, it is contained in a small portion of the full width of the plate device 10, since there are three fluid port cross-sections in this particular exemplary embodiment, the number an arrangement of which might, however, greatly vary for different conditions and applications. The respective fluid shall spread out to the full width of the plate device 10 as it enters the active area of the cell 20 via channels in the cell section 12 of the plate device 10. This spreading out of flow occurs in the transition regions 11. The transition section 11 depicted in Fig. 2 is in fluid communication with the fuel supplying fluid port 32.

The transition section 11 exhibits a diffusive array of equidistantly arranged pillar elements 14 through-out the entire area of transition section 11. The pillar elements have a circular cross-section. In first place, the diffusive array of pillar elements 14 serves for supporting the membrane electrode assembly in this region so that it would not completely block a fluid flow on a reactant side with a comparably lower pressure. Also, the diffusive array of pillar elements 14 serves for effecting swirls in a flow by regular partial pressure differences and results in a desired distribution of fluid flow in a width direction at a considerable low over all flow resistance.

For supporting a directivity and a broadening or narrowing of a fluid flow, the plate devices 10 comprises guiding rail elements 15. The rail elements 15 guide a primary flow part wise into several secondary flows of a diverted flow direction upon impinging on the rail elements 15. However, the guiding rail elements 15 do not form discrete channels from an inlet side to an outlet side, so as to permit a variety of crossing pathways and pressure equalization between the secondary flows. The plate profile of Fig. 2 for transferring the fuel gas has a symmetrical arrangement of guiding rail elements 15 due to the axis symmetrical arrangement of the fuel port 32. Other plate profiles (not shown in Fig. 2) being in fluid communication with the lower side oxidant port 31 and the upper side coolant port 33 for transferring the oxidation gas and coolant have a rather oblique or diagonal arrangement of guiding rail elements 15 due to the point symmetrical diagonal arrangement of the oxidant ports 31 and coolant ports 33. Within those plate profiles, the rail elements 15 might also have one or two angled sections joining two or three longitudinal sections extending in different directions for diverting a secondary flow more intensive or, in other words, in a more compact space.

Furthermore, the plate features according to all plate profiles exhibit barrier elements 16 for throttling direct pathways in certain secondary flows induced by the guiding rail elements 15. Especially those secondary flows diverted along a shortest distance between a respective fluid port 31, 32, 33 and the cell 20 are throttled by means of one or more barrier elements 16 of an individual dimension causing additional flow resistance for compensating a lower flow resistance in a shorter pathway.

In the plate profile depicted for the fuel, large throttling barrier elements 16 are arranged for compensating a central pressure peak and the shortest distance between the fuel ports 32 and the cell 20 of a central secondary flow in favor of an equal pressure distribution and volume flow via the diverted secondary flows along the sides of the transition section 11.

More general, the throttling barrier elements 16 increase flow resistance and are used in areas of the transition section 11 including pathways of least resistance, so as to balance a flow between the secondary fluid flows induced by the rail elements 15.

In an alternative embodiment, the throttling barrier elements 16 and/or the guiding rail elements may not only be configured with respect to an elongated or longitudinal dimension, but also for a dimension in height or an inclination direction of protrusion from a bottom of the transition section 11, so as to not block the complete depth of the flat shaped flow cross-section of the transition section 11 recessed in the plate device 10.

### List of reference characters

- 10: plate device
- 11: transition section
- 12: cell section
- 13: port section
- 14: pillar element
- 15: rail element
- 16: barrier element
- 20: cell
- 30: fluid port
- 31: oxidant port
- 32: fuel port
- 33: coolant port

## Claims

1. A plate device (10) for an electrochemical fuel cell (20) stack having stacked cells (20); wherein
the plate device (10) being provided per each cell (20) for distributing and collecting a fluid across planar dimensions of a cell (20); wherein the plate device (10) comprises:
a central cell section (12) encompassing a plurality of channels across planar dimensions of a cell (20);
an outer port section (13) enclosing a cross-section opening of a fluid port (30) passing through the plate device (10) in a thickness direction; and
a transition section (11) forming a flat shaped flow cross-section in a planar direction of the plate device (10) being in fluid communication between the fluid port (30) and the cell (20); wherein
the plate device (10) having plate features arranged in the transition section (11) for distributing or collecting a fluid to be transferred through the flat shaped flow cross-section, wherein
the plate features comprise at least one barrier element (16) being disposed within a fluid flow and having an elongated cross-section inclined to a flow direction of the fluid flow for locally throttling said fluid flow.

2. The plate device (10) according to claim 1, wherein the plate features comprise a combination of:
the at least one barrier element (16) for locally throttling the fluid flow; and
pillar elements (14) being arranged in an array formed through-out the flat shaped flow cross-section of the transition section (11) for diffusing the fluid flow.

3. The plate device (10) according to claim 1 or 2, wherein the plate features comprise a combination of:
the at least one barrier element (16); and
rail elements (15) having a longitudinal dimension directed for guiding a primary fluid flow into different flow directions of secondary fluid flows; wherein
the at least one barrier element (16) is disposed within a secondary fluid flow for throttling said secondary fluid flow.

4. The plate device (10) according to the preceding claims, wherein the plate features comprise a combination of:
the at least one barrier element (16);
the pillar elements (14) being arranged in an array formed through-out the flat shaped flow cross-section for diffusing the fluid flow; and
the rail elements (15) having a longitudinal dimension extending through the array of diffusive pillar elements (14) for guiding a primary fluid flow into different flow directions of secondary fluid flows; wherein
a plurality of the at least one barrier elements (16) being disposed within secondary fluid flows and each barrier element (16) having an elongated cross-section inclined to a flow direction of the respective secondary fluid flow for throttling said secondary fluid flow.

5. The plate device (10) according to any of the preceding claims, wherein one of the at least one barrier element (16) is disposed within a secondary flow of a flow direction along a shortest distance between the fluid port (30) and the cell (20); and
the elongated cross-section is inclined perpendicular to the flow direction for obstructing into a region of direct pathways within said secondary flow.

6. The plate device (10) according to any of the preceding claims, wherein another one of the at least one throttling barrier element (16) is disposed within a secondary flow of a flow direction diverted from a shortest distance between the fluid port (30) and the cell (20) by guidance of one of the rail elements (15); and
the elongated cross-section of the throttling barrier element (16) is inclined oblique to the flow direction and/or inclined perpendicular to said shortest distance for obstructing into a region of diverted pathways within said secondary flow.

7. The plate device (10) according to any of the preceding claims, wherein the diffusive array of pillar elements (14) has a regular positioning pattern of pillar elements (14), in particular an equidistant and/or square positioning of pillar elements (14).

8. The plate device (10) according to any of the preceding claims, wherein the cross-section of pillar elements (14) has an equal aspect ratio, in particular a circular, square and/or polygonal cross-section.

9. The plate device (10) according to any of the preceding claims, wherein the longitudinal dimension of a guiding rail element (15) extends across a distance equal to at least three adjacent pillar elements (14) in line with and/or inclined to the diffusive array of pillar elements (14).

10. The plate device (10) according to any of the preceding claims, wherein a guiding rail element (15) has at least two longitudinal dimensions joined in an angle, wherein, in particular, at least one longitudinal dimension extending in line and at least one longitudinal dimension extending diagonally inclined to the diffusive array of pillar elements (14)

11. The plate device (10) according to any of the preceding claims, wherein the fluid port (30) is configured for supplying or returning an oxidant gas or a fuel gas reacting in the cell.

12. The plate device (10) according to any of the preceding claims, wherein the port section (13) of the plate device (10) encloses cross-section openings of fluid ports (31, 32, 33) for oxidant gas, fuel gas and coolant passing through the plate device (10); and
wherein one of two opposite sides of the plate device (10) in a thickness direction forms one transition section (11) in fluid communication between one of the fluid ports (31, 32, 33) and the cell (20).

13. The plate device (10) according to any of the preceding claims, wherein the plate device (10) comprises two outer port sections (13) and two transition sections (11) arranged on opposite sides with respect to the cell section (12); wherein
one of the two port section (13) encloses cross-section openings of fluid ports (31, 32, 33) for supplying a coolant or a educt fluid of an oxidant gas or a fuel gas, and the other port section (13) encloses cross-section openings of fluid ports (31, 32, 33) for returning the coolant or a respective kind of unused educt fluid and/or product fluid; and
one of the two transition sections (11) is in fluid communication between the cell (20) and one of the fluid ports (31, 32, 33) for supplying one of said fluids, and the other transition section (11) is in fluid communication between the cell (20) and one of the fluid ports (31, 32, 33) for returning the same or respective kind of same fluid, wherein,
with respect to an arrangement of fluid port cross-sections in both port sections (13) of the plate device (10), each pair of fluid ports (31, 32, 33) supplying and returning the same or respective kind of same fluid is arranged to oppose diametrically across the cell section (12).

14. The plate device (10) according to any of the preceding claims, wherein the plate device (10) is a bipolar plate configured to provide electrical conduction between the stacked cells (20).

15. An electrochemical fuel cell device having a stack arrangement of stacked cells (20), and accommodating fluid ports (31, 32, 33) for fuel gas, oxidant gas and/or coolant passing through a stacking direction of the stack arrangement; wherein the fuel cell device comprises between each of the stacked cells (20) at least one plate device (10) according to any of claims 1 to 17 for distributing and collecting a fluid across planar dimensions of a respective cell (20) in fluid communication with at least one of the fluid ports (31, 32, 33).
